# EUROPEAN PATENT APPLICATION

(11) **EP 4 845 245 A1**
(43) Date of publication of application: **25.11.2026**
(21) Application number: 25760745.7
(22) Date of filing: 10.02.2025
(51) Int. Cl.: H04W 52/56

(54) **COMMUNICATION METHOD AND APPARATUS**

(30) Priority: 26.02.2024 CN 202410218060
(71) Applicant: Huawei Technologies Co., Ltd., Shenzhen, Guangdong 518129 (CN)
(72) Inventor: LI, Yunbo, Shenzhen, Guangdong 518129 (CN); YU, Jian, Shenzhen, Guangdong 518129 (CN); GAN, Ming, Shenzhen, Guangdong 518129 (CN)
(74) Representative: MERH-IP Matias Erny Reichl Hoffmann Patentanwälte PartG mbB
(86) International application number: PCT/CN2025/076652
(87) International publication number: WO 2025/180201

(57) **Abstract**

This application discloses a communication method and apparatus, and relates to the field of WLAN technologies. An initial control frame can be checked quickly and effectively, thereby improving data transmission efficiency. The method includes: obtaining an initial control frame, where the initial control frame includes a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field; and sending the initial control frame to a first multi-link device, where the initial control frame is used to indicate the first multi-link device to switch from a listening state to an awake state.

## Description

This application claims priority to Chinese Patent Application No. 202410218060.4, filed with the China National Intellectual Property Administration on February 26, 2024 and entitled "COMMUNICATION METHOD AND APPARATUS", which is incorporated herein by reference in its entirety.

### TECHNICAL FIELD

This application relates to the field of WLAN technologies, and in particular, to a communication method and apparatus.

### BACKGROUND

A doze state (doze) and an awake state (awake) are introduced in a wireless local area network (wireless local area network, WLAN) standard. In the doze state, a terminal does not have any sending and receiving capabilities, and in the awake state, the terminal can send and receive data. To reduce a communication latency of the terminal while reducing power consumption, a listening state may be introduced. In the listening state, the terminal has limited sending and receiving capabilities. Specifically, when a peer station needs to send data to the terminal, the peer station may send an initial control frame (initial control frame) to the terminal, to indicate the terminal to switch from the listening state to the awake state.

To reserve more state switching time for the terminal, padding (that is, MAC padding) is usually performed at a media access control (media access control, MAC) layer of the initial control frame, so that the terminal can perform bandwidth/frequency adjustment within time corresponding to the MAC padding.

However, before performing state switching, the terminal needs to first check a frame check sequence (frame check sequence, FCS) in the initial control frame, and the FCS is located at a tail of the initial control frame. As a result, the terminal cannot perform bandwidth/frequency adjustment within the time corresponding to the MAC padding, and data transmission efficiency is affected.

### SUMMARY

This application provides a communication method and apparatus, to quickly and effectively check an initial control frame, thereby improving data transmission efficiency.

According to a first aspect, a communication method is provided. The method may be performed by a second multi-link device, or may be performed by a component of the second multi-link device, for example, a processor, a chip, or a chip system of the second multi-link device, or may be implemented by a logic module or software that can implement all or some functions of the second multi-link device. Alternatively, the method may be performed by a station in the second multi-link device, or may be performed by a component of the station, for example, a processor, a chip, or a chip system of the station, or may be implemented by a logical module or software that can implement all or some functions of the station. The method includes:
obtaining an initial control frame, where the initial control frame includes a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field; and sending the initial control frame to a first multi-link device, where the initial control frame is used to indicate the first multi-link device to switch from a listening state to an awake state.

In this application, the second communication apparatus may obtain the initial control frame and send the initial control frame to a first communication apparatus. The initial control frame includes the first field and the frame check sequence field, the first field is used to carry the second frame check sequence, and the frame check sequence field is used to carry the first frame check sequence. In this way, after receiving the initial control frame, the first communication apparatus may check the initial control frame based on the second frame check sequence, and may also check the initial control frame based on the first frame check sequence, to implement a process of checking the initial control frame, thereby quickly and effectively checking the initial control frame, and improving data transmission efficiency.

In a possible design, a part of the first field excluding the second frame check sequence is remaining bits other than the second frame check sequence and an association identifier 12 field in the first field.

Based on the possible design, the part of the first field other than the second frame check sequence is the remaining bits in the first field other than the second frame check sequence and the association identifier 12 field. In this way, after receiving the initial control frame, the first multi-link device may check the remaining bits in the first field other than the second frame check sequence and the association identifier 12 field, so that correctness of the remaining bits can be accurately and effectively determined, thereby improving validity of checking the initial control frame.

In a possible design, the first field includes a second field and a third field, the second field is used to carry the association identifier 12 field and a first part of the second frame check sequence, and the third field is used to carry the association identifier 12 field and a second part of the second frame check sequence.

Based on the possible design, the second field in the initial control frame carries the association identifier 12 field and the first part of the second frame check sequence, and the third field in the initial control frame carries the association identifier 12 field and the second part of the second frame check sequence. This can ensure that the initial control frame can carry all content of the second frame check sequence, thereby improving effectiveness of checking the initial control frame based on the second frame check sequence.

In a possible design, the second field and/or the third field are/is further used to carry a reserved field.

Based on the possible design, the reserved field is carried in the second field and/or the third field, to ensure that the second field and the third field are fully used, thereby improving resource utilization in a communication process, and helping meet diversified configurations in the future.

In a possible design, the first part of the second frame check sequence is located in B24 to B39 of the second field, and the second part of the second frame check sequence is located in B24 to B39 of the third field.

Based on the possible design, the first part of the second frame check sequence is located in B24 to B29 of the second field, and the second part of the second frame check sequence is located in B24 to B39 of the third field. In this way, the first part of the second frame check sequence is located after the reserved field carried in the second field, and the second part of the second frame check sequence is also located after the reserved field carried in the third field, so that the second frame check sequence can be placed at a rear location in the second field and the third field, which complies with a convention of placing a frame check sequence after a field to be checked (including the association identifier 12 field and the reserved field, also referred to as a bit to be checked), thereby creating an aesthetically pleasing layout and facilitating implementation.

In a possible design, the first part of the second frame check sequence is located in B12 to B39 of the second field, and the second part of the second frame check sequence is located in B36 to B39 of the third field.

Based on the possible design, the first part of the second frame check sequence is located in B12 to B39 of the second field, and the second part of the second frame check sequence is located in B36 to B39 of the third field. In this way, the second frame check sequence can be placed at a rear position in the second field and the third field, which complies with the convention of placing the frame check sequence after the field to be checked.

In a possible design, the first part of the second frame check sequence is located in B36 to B39 of the second field, and the second part of the second frame check sequence is located in B12 to B39 of the third field.

Based on the possible design, the first part of the second frame check sequence is located in B36 to B39 of the second field, and the second part of the second frame check sequence is located in B12 to B39 of the third field. In this way, the second frame check sequence can be placed at a rear position in the second field and the third field, which complies with the convention of placing the frame check sequence after the field to be checked.

In a possible design, the first part of the second frame check sequence is located in B12 to B27 of the second field, and the second part of the second frame check sequence is located in B12 to B27 of the third field.

Based on the possible design, the first part of the second frame check sequence is located in B12 to B27 of the second field, and the second part of the second frame check sequence is located in B12 to B27 of the third field. In this way, the first part of the second frame check sequence is located before the reserved field carried in the second field, and the second part of the second frame check sequence is also located before the reserved field carried in the third field. In other words, the second frame check sequence may be placed in a front position of the second field and the third field, so that a first communication apparatus can parse the second frame check sequence as early as possible, thereby improving check efficiency of the initial control frame.

In a possible design, the first part of the second frame check sequence is located in B12 to B39 of the second field, and the second part of the second frame check sequence is located in B12 to B15 of the third field.

Based on the possible design, the first part of the second frame check sequence is located in B12 to B39 of the second field, and the second part of the second frame check sequence is located in B12 to B15 of the third field. In this way, the second frame check sequence may be placed in a front position of the second field and the third field, so that a first communication apparatus can parse the second frame check sequence as early as possible, thereby improving check efficiency of the initial control frame.

According to a second aspect, a communication method is provided. The method may be performed by a first multi-link device, or may be performed by a component of the first multi-link device, for example, a processor, a chip, or a chip system of the first multi-link device, or may be implemented by a logic module or software that can implement all or some functions of the first multi-link device. Alternatively, the method may be performed by a station in the first multi-link device, or may be performed by a component of the station, for example, a processor, a chip, or a chip system of the station, or may be implemented by a logical module or software that can implement all or some functions of the station. The method includes:
receiving an initial control frame sent by a second multi-link device, where the initial control frame includes a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field; and switching from a listening state to an awake state after the initial control frame is successfully checked.

In this application, the initial control frame includes the first field and the frame check sequence field, the first field is used to carry the second frame check sequence, and the frame check sequence field is used to carry the first frame check sequence. Therefore, after receiving the initial control frame sent by a second communication apparatus, the first communication apparatus may check the initial control frame based on the second frame check sequence, and may also check the initial control frame based on the first frame check sequence, to implement a process of checking the initial control frame, thereby quickly and effectively checking the initial control frame, and improving data transmission efficiency.

In a possible design, a part of the first field excluding the second frame check sequence is remaining bits other than the second frame check sequence and an association identifier 12 field in the first field.

Based on the possible design, the part of the first field other than the second frame check sequence is the remaining bits in the first field other than the second frame check sequence and the association identifier 12 field. In this way, after receiving the initial control frame, the first multi-link device may check the remaining bits in the first field other than the second frame check sequence and the association identifier 12 field, so that correctness of the remaining bits can be accurately and effectively determined, thereby improving validity of checking the initial control frame.

In a possible design, the first field includes a second field and a third field, the second field is used to carry the association identifier 12 field and a first part of the second frame check sequence, and the third field is used to carry the association identifier 12 field and a second part of the second frame check sequence.

Based on the possible design, the second field in the initial control frame carries the association identifier 12 field and the first part of the second frame check sequence, and the third field in the initial control frame carries the association identifier 12 field and the second part of the second frame check sequence. This can ensure that the initial control frame can carry all content of the second frame check sequence, thereby improving effectiveness of checking the initial control frame based on the second frame check sequence.

In a possible design, the second field and/or the third field are/is further used to carry a reserved field.

Based on the possible design, the reserved field is carried in the second field and/or the third field, to ensure that the second field and the third field are fully used, thereby improving resource utilization in a communication process, and helping meet diversified configurations in the future.

In a possible design, the first part of the second frame check sequence is located in B24 to B39 of the second field, and the second part of the second frame check sequence is located in B24 to B39 of the third field.

Based on the possible design, the first part of the second frame check sequence is located in B24 to B29 of the second field, and the second part of the second frame check sequence is located in B24 to B39 of the third field. In this way, the first part of the second frame check sequence is located after the reserved field carried in the second field, and the second part of the second frame check sequence is also located after the reserved field carried in the third field, so that the second frame check sequence can be placed at a rear location in the second field and the third field, which complies with a convention of placing a frame check sequence after a field to be checked (including the association identifier 12 field and the reserved field, also referred to as a bit to be checked), thereby creating an aesthetically pleasing layout and facilitating implementation.

In a possible design, the first part of the second frame check sequence is located in B12 to B39 of the second field, and the second part of the second frame check sequence is located in B36 to B39 of the third field.

Based on the possible design, the first part of the second frame check sequence is located in B12 to B39 of the second field, and the second part of the second frame check sequence is located in B36 to B39 of the third field. In this way, the second frame check sequence can be placed at a rear position in the second field and the third field, which complies with the convention of placing the frame check sequence after the field to be checked.

In a possible design, the first part of the second frame check sequence is located in B36 to B39 of the second field, and the second part of the second frame check sequence is located in B12 to B39 of the third field.

Based on the possible design, the first part of the second frame check sequence is located in B36 to B39 of the second field, and the second part of the second frame check sequence is located in B12 to B39 of the third field. In this way, the second frame check sequence can be placed at a rear position in the second field and the third field, which complies with the convention of placing the frame check sequence after the field to be checked.

In a possible design, the first part of the second frame check sequence is located in B12 to B27 of the second field, and the second part of the second frame check sequence is located in B12 to B27 of the third field.

Based on the possible design, the first part of the second frame check sequence is located in B12 to B27 of the second field, and the second part of the second frame check sequence is located in B12 to B27 of the third field. In this way, the first part of the second frame check sequence is located before the reserved field carried in the second field, and the second part of the second frame check sequence is also located before the reserved field carried in the third field. In other words, the second frame check sequence may be placed in a front position of the second field and the third field, so that a first communication apparatus can parse the second frame check sequence as early as possible, thereby improving check efficiency of the initial control frame.

In a possible design, the first part of the second frame check sequence is located in B12 to B39 of the second field, and the second part of the second frame check sequence is located in B12 to B15 of the third field.

Based on the possible design, the first part of the second frame check sequence is located in B12 to B39 of the second field, and the second part of the second frame check sequence is located in B12 to B15 of the third field. In this way, the second frame check sequence may be placed in a front position of the second field and the third field, so that a first communication apparatus can parse the second frame check sequence as early as possible, thereby improving check efficiency of the initial control frame.

In a possible design, if the first multi-link device is capable of parsing the second frame check sequence and the first multi-link device is a non-target receiving station of the initial control frame, the field before the first field in the initial control frame and some or all bits in the first field excluding the second frame check sequence are checked based on the second frame check sequence; when the field before the first field in the initial control frame and some or all bits in the first field excluding the second frame check sequence are successfully checked based on the second frame check sequence, that the initial control frame is successfully checked is determined.

Based on the possible design, if the first communication apparatus can parse the second frame check sequence, it indicates that the first communication apparatus has a parsing capability (or an identification capability) of the second frame check sequence, and the first communication apparatus may check the initial control frame based on the second frame check sequence. In this case, when the first communication apparatus is the non-target receiving station of the initial control frame, the first communication apparatus may check, based on the second frame check sequence, the field before the first field in the initial control frame and some or all bits in the first field excluding the second frame check sequence. When the field before the first field in the initial control frame and some or all bits in the first field excluding the second frame check sequence are successfully checked based on the second frame check sequence, it indicates that no exception/error exists in the initial control frame in a transmission process. In this case, the first communication apparatus may determine that the initial control frame is successfully checked, thereby accurately and effectively determining the check result of the initial control frame.

In a possible design, if the second frame check sequence cannot be parsed, the initial control frame is checked based on the first frame check sequence.

Based on the possible design, if the first communication apparatus cannot parse the second frame check sequence, it indicates that the first communication apparatus does not have a capability of parsing/identifying the second frame check sequence, and specifically, cannot check the initial control frame based on the second frame check sequence. In this case, the first communication apparatus may check the initial control frame based on the first frame check sequence, to ensure that a checking process of the initial control frame is effectively performed.

According to a third aspect, a communication apparatus is provided, and is configured to implement the foregoing methods. The communication apparatus may be the second multi-link device in the first aspect, or an apparatus included in the second multi-link device, for example, a chip; or the communication apparatus may be a station in the second multi-link device in the first aspect, or an apparatus included in the station, for example, a chip; or the communication apparatus may be the first multi-link device in the second aspect, or an apparatus included in the first multi-link device, for example, a chip; or the communication apparatus may be a station in the first multi-link device in the second aspect, or an apparatus included in the station, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may include a sending module and a receiving module that are respectively configured to implement a sending function and a receiving function in any one of the foregoing aspects and the possible designs of the foregoing aspects. The processing module may be configured to implement a processing function in any one of the foregoing aspects and any possible design thereof.

According to a fourth aspect, a communication apparatus is provided, where the apparatus includes a processor and a memory, the memory is configured to store computer instructions, and when the processor executes the instructions, the communication apparatus is enabled to perform the method in either of the foregoing aspects. The communication apparatus may be the second multi-link device in the first aspect, or an apparatus included in the second multi-link device, for example, a chip; or the communication apparatus may be a station in the second multi-link device in the first aspect, or an apparatus included in the station, for example, a chip; or the communication apparatus may be the first multi-link device in the second aspect, or an apparatus included in the first multi-link device, for example, a chip; or the communication apparatus may be a station in the first multi-link device in the second aspect, or an apparatus included in the station, for example, a chip.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to either of the foregoing aspects. The communication apparatus may be the second multi-link device in the first aspect, or an apparatus included in the second multi-link device, for example, a chip; or the communication apparatus may be a station in the second multi-link device in the first aspect, or an apparatus included in the station, for example, a chip; or the communication apparatus may be the first multi-link device in the second aspect, or an apparatus included in the first multi-link device, for example, a chip; or the communication apparatus may be a station in the first multi-link device in the second aspect, or an apparatus included in the station, for example, a chip.

According to a sixth aspect, a communication apparatus is provided, including a logic circuit and an interface circuit, where the interface circuit is configured to input and/or output information, and the logic circuit is configured to perform the method in any one of the foregoing aspects, and perform processing and/or generate the to-be-output information based on the input information. The communication apparatus may be the second multi-link device in the first aspect, or an apparatus included in the second multi-link device, for example, a chip; or the communication apparatus may be a station in the second multi-link device in the first aspect, or an apparatus included in the station, for example, a chip; or the communication apparatus may be the first multi-link device in the second aspect, or an apparatus included in the first multi-link device, for example, a chip; or the communication apparatus may be a station in the first multi-link device in the second aspect, or an apparatus included in the station, for example, a chip.

According to a seventh aspect, a communication apparatus is provided, including an interface circuit and a processor, where the interface circuit is a code/data read/write interface circuit, and the interface circuit is configured to receive computer-executable instructions (where the computer-executable instructions are stored in a memory, may be directly read from the memory, or may pass through another component) and transmit the computer-executable instructions to the processor; and the processor is configured to execute the computer-executable instructions, to enable the communication apparatus to perform the method according to any one of the foregoing aspects. The communication apparatus may be the second multi-link device in the first aspect, or an apparatus included in the second multi-link device, for example, a chip; or the communication apparatus may be a station in the second multi-link device in the first aspect, or an apparatus included in the station, for example, a chip; or the communication apparatus may be the first multi-link device in the second aspect, or an apparatus included in the first multi-link device, for example, a chip; or the communication apparatus may be a station in the first multi-link device in the second aspect, or an apparatus included in the station, for example, a chip.

According to an eighth aspect, a communication apparatus is provided, including at least one processor, where the processor is configured to execute a computer program or instructions, to enable the communication apparatus to perform the method according to any one of the foregoing aspects. The communication apparatus may be the second multi-link device in the first aspect, or an apparatus included in the second multi-link device, for example, a chip; or the communication apparatus may be a station in the second multi-link device in the first aspect, or an apparatus included in the station, for example, a chip; or the communication apparatus may be the first multi-link device in the second aspect, or an apparatus included in the first multi-link device, for example, a chip; or the communication apparatus may be a station in the first multi-link device in the second aspect, or an apparatus included in the station, for example, a chip.

In some possible designs, the communication apparatus includes a memory, and the memory is configured to store a necessary computer program or instructions. The memory may be coupled to the processor, or may be independent of the processor.

In some possible designs, the communication apparatus may be a chip or a chip system. When the apparatus is the chip system, the chip system may include a chip, or may include a chip and another discrete device.

According to a ninth aspect, a computer-readable storage medium is provided. The computer-readable storage medium stores a computer program or instructions. When the computer program or the instructions are executed by a processor, the method according to any one of the foregoing aspects is performed.

According to a tenth aspect, a computer program product is provided. When the computer program product is executed by a processor, the method according to any one of the foregoing aspects is performed.

It may be understood that when the communication apparatus provided in any one of the third aspect to the tenth aspect is a chip, the foregoing sending action/function may be understood as outputting information, and the foregoing receiving action/function may be understood as inputting information.

For technical effects brought by any design manner in the third aspect to the tenth aspect, refer to technical effects brought by different design manners in the first aspect and the second aspect. Details are not described herein again.

According to an eleventh aspect, a communication system is provided. The communication system includes the second multi-link device according to the first aspect and the first multi-link device according to the second aspect. Alternatively, the communication system includes the station in the second multi-link device according to the first aspect and the station in the first multi-link device according to the second aspect.

It should be understood that the foregoing general descriptions and the following detailed descriptions are merely illustrative and explanatory, and do not limit this application.

### BRIEF DESCRIPTION OF DRAWINGS

FIG. 1 is a diagram of multi-link communication according to an embodiment of this application;
FIG. 2 is a diagram of a structure of an MU-RTS frame according to an embodiment of this application;
FIG. 3 is a diagram of a structure of a communication system according to an embodiment of this application;
FIG. 4 is a schematic flowchart of a communication method according to an embodiment of this application;
FIG. 5 is a diagram of a structure of an initial control frame according to an embodiment of this application;
FIG. 6 is a diagram of a structure of a second field and a third field according to an embodiment of this application;
FIG. 7 is a diagram of a structure of another second field and another third field according to an embodiment of this application;
FIG. 8 is a diagram of a structure of another second field and another third field according to an embodiment of this application;
FIG. 9 is a diagram of a structure of another second field and another third field according to an embodiment of this application;
FIG. 10 is a diagram of a structure of another second field and another third field according to an embodiment of this application;
FIG. 11 is a schematic flowchart of another communication method according to an embodiment of this application;
FIG. 12 is a diagram of a structure of a second communication apparatus according to an embodiment of this application;
FIG. 13 is a diagram of a structure of a first communication apparatus according to an embodiment of this application; and
FIG. 14 is a diagram of a structure of a communication apparatus according to an embodiment of this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It should be further understood that the term "include" indicates existence of the described feature, whole, step, operation, element, and/or component, but does not exclude existence or addition of one or more other features, wholes, steps, operations, elements, and/or components.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of various embodiments. In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. The following implementations of this application do not constitute a limitation on the protection scope of this application.

For ease of understanding the solutions provided in embodiments of this application, some concepts in this application are first explained and described.

### 1. Multi-link and multi-link device (multi-link device, MLD)

The next-generation wireless local area network (wireless local area network, WLAN) standard 802.11be of the Institute of Electrical and Electronics Engineers (institute of electrical and electronics engineers, IEEE) takes an extremely high throughput (extremely high throughput, EHT) as a technical target, and one of existing key technologies is multi-link (multi-link, ML) communication.

A core idea of multi-link communication is that a WLAN device (also referred to as an EHT device) that supports the next-generation IEEE 802.11 standard has capabilities of sending and receiving on a plurality of frequency bands, so that a larger bandwidth can be used for transmission, and further improves a throughput. The WLAN device that supports multi-link communication may be referred to as an MLD. For example, the plurality of frequency bands include but are not limited to a 2.4 GHz frequency band, a 5 GHz frequency band, and a 6 GHz frequency band.

In this application, the MLD includes at least two affiliated (affiliated) stations (stations, STAs), namely, affiliated STAs. The affiliated station may be an access point station (access point station, AP STA) or a non-access point station (non-access point station, non-AP STA).

For ease of description, in the following embodiments of this application, the AP STA is referred to as an AP for short, and the non-AP STA is referred to as an STA for short. A multi-link device whose affiliated station is an AP is referred to as an AP multi-link device (AP multi-link device, AP MLD), and a multi-link device whose affiliated station is a non-AP STA may be referred to as a non-AP multi-link device (non-access point multi-link device, non-AP MLD).

In this application, each affiliated station of the MLD may set up a link for communication. Thus, links set up by a plurality of affiliated stations are referred to as a multi-link.

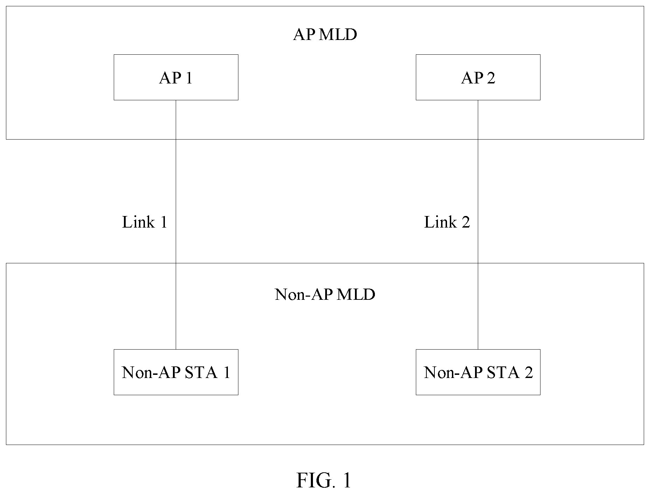

For example, as shown in FIG. 1, for example, an AP MLD includes an affiliated AP 1 and an affiliated AP 2, and a non-AP MLD includes an affiliated non-AP STA 1 and an affiliated non-AP STA 2. A link 1 may be established between the AP 1 and the non-AP STA 1, a link 2 may be established between the AP 2 and the non-AP STA 2, and the AP MLD and the non-AP MLD may use the link 1 and the link 2.

### 2. Initial control frame (initial control frame)

To reduce power consumption of a multi-link device, the WLAN standard introduces a doze state (doze) and an awake state (awake). In the doze state, the multi-link device does not have any sending and receiving capabilities, and in the awake state, the multi-link device can send and receive data. The multi-link device is enabled to be in the doze state as much as possible to reduce power consumption. However, this method is not flexible, and may cause a large latency.

To reduce a communication latency of a terminal while reducing power consumption, a listening state may be introduced. The listening state may be understood as a special awake state. In the listening state, the multi-link device has limited sending and receiving capabilities, and the multi-link device is in a low-power-consumption state.

When a peer station needs to send data to the multi-link device, the peer station may send an initial control frame to the multi-link device. After receiving the initial control frame, the multi-link device exits the listening state (or switches from the listening state to the awake state), so that the multi-link device can perform communication based on the awake state with stronger sending and receiving capabilities.

### 3. Frame check sequence (frame check sequence, FCS).

The frame check sequence is also referred to as a frame check sequence or frame check sum (frame check sum), and is a sequence used to check whether an error occurs during transmission of a data frame. The frame check sequence is usually appended to the tail of the data frame and is used by a receiving party for error detection.

A multi-link device needs to check an initial control frame based on the frame check sequence, to switch from a listening state to an awake state when the check is successful/correct.

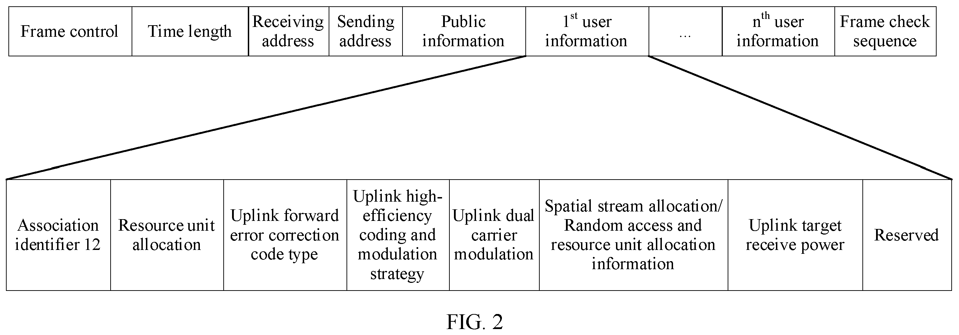

For example, as shown in FIG. 2, the initial control frame may be a trigger frame, and is specifically an MU-RTS (multi user request to send) frame. The initial control frame includes a frame control (Frame Control) field, a duration (Duration) field, a receiver address (receiver address, RA) field, a transmitter address (transmitter address, TA) field, a common information (Common Info) field, one or more user information (User Info) fields (including n user information fields shown in FIG. 2, where n ≥ 1), and a frame check sequence (frame check sequence, FCS) field.

Specifically, the frame control field is used to identify a type, a subtype, and other control information of a frame. The duration field indicates duration from the time when the initial control frame is sent to time when a channel is released for use by another device. The receiver address field indicates a MAC address of an STA that receives the initial control frame. The transmitter address field indicates a MAC address of an STA that sends the initial control frame. The user information field may include a type of a frame, a transmitter address, a receiver address, a communication parameter, and the like. The frame check sequence field is used to check the initial control frame.

Further, one user information field (for example, the 1^{st} user information field) includes an association identifier (association identifier, AID) 12 field, a resource unit allocation ((resource unit, RU) Allocation) field, an uplink forward error correction coding type ((uplink, UL) (forward error correction, FEC) Coding Type) field, an uplink high efficiency modulation and coding scheme (uplink high efficiency modulation and coding scheme, UL HE-MCS) field, an uplink dual-carrier modulation (uplink dual carrier modulation, UL DCM) field, spatial stream allocation/random access and resource unit allocation information ((spatial stream, SS) Allocation/(random access, RA)-(resource unit, RU) Information) field, an uplink target receive power ((uplink, UL) Target Receive Power) field, and a reserved (Reserved) field.

The association identifier 12 field is used to identify a 12-bit auxiliary identifier associated with the STA, and may uniquely identify each STA in a WLAN. The resource unit allocation field is used to notify a station that receives the initial control frame of a resource unit that is to be used for upcoming downlink transmission. The uplink forward error correction coding type field indicates a forward error correction coding type to be used in uplink transmission, to ensure reliability of uplink data transmission. The uplink high efficiency modulation and coding scheme field indicates a high efficiency modulation and coding scheme to be used in uplink transmission, to ensure a speed of uplink data transmission. The uplink dual-carrier modulation field indicates a data compression mode to be used in uplink transmission, to optimize efficiency and bandwidth of uplink data transmission. The resource unit allocation information field indicates spatial stream allocation for uplink transmission and information related to random access or a resource unit, and is highly important for managing uplink multi-user transmission and allocating a radio resource. The uplink target receive power field indicates target receive power for uplink transmission, to ensure correctness of uplink data transmission. The reserved field is used to reserve specific information or functions for use in a future standard or extension.

It may be understood that, after receiving the initial control frame, the multi-link device returns an initial control response frame (initial control response frame) to notify the multi-link device that the multi-link device has exited the listening state, and a time interval between a frame end moment of the initial control frame and a frame start moment of the initial control response frame is short inter frame space (short inter frame space, SIFS) time. In a process of state switching performed by the multi-link device, if a bandwidth/frequency adjustment process is involved, the SIFS time may be insufficient. To reserve more state switching time for the multi-link device, padding (that is, MAC padding) is usually performed at a media access control (media access control, MAC) layer of the initial control frame, so that the multi-link device can perform bandwidth/frequency adjustment within time corresponding to the MAC padding. Before performing state switching, the multi-link device needs to first check the initial control frame based on the frame check sequence. However, the frame check sequence is located at a tail of the initial control frame. As a result, the multi-link device cannot perform bandwidth/frequency adjustment within the time corresponding to the MAC padding, that is, the MAC padding cannot work at all, affecting data transmission efficiency.

In this embodiment of this application, a new frame check sequence may be added before the MAC padding. In the following embodiments, the newly added frame check sequence (namely, the frame check sequence that is located before the MAC padding in the initial control frame) is referred to as a second frame check sequence, and a frame check sequence that is located after the MAC padding in the initial control frame is referred to as a first frame check sequence. Names of the two frame check sequences included in the initial control frame are not specifically limited in embodiments of this application.

The following describes the solutions of this application with reference to the accompanying drawings. Embodiments of this application may be applicable to a WLAN scenario, and may be applicable to an IEEE 802.11 system standard, for example, an 802.11a/b/g standard, an 802.11n standard, an 802.11ac standard, an 802.11ax standard, a next generation of the IEEE 802.11 system standard, for example, an 802.11be standard, which is also referred to as a Wi-Fi 7 standard or an extremely high throughput (extremely high-throughput, EHT) standard, or a next-generation standard. Alternatively, embodiments of this application may be applicable to a wireless local area network system, for example, an Internet of Things (internet of things, IoT) network or a vehicle-to-X (Vehicle to X, V2X) network. Embodiments of this application are also applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a next-generation 5th generation (5th generation, 5G) communication system.

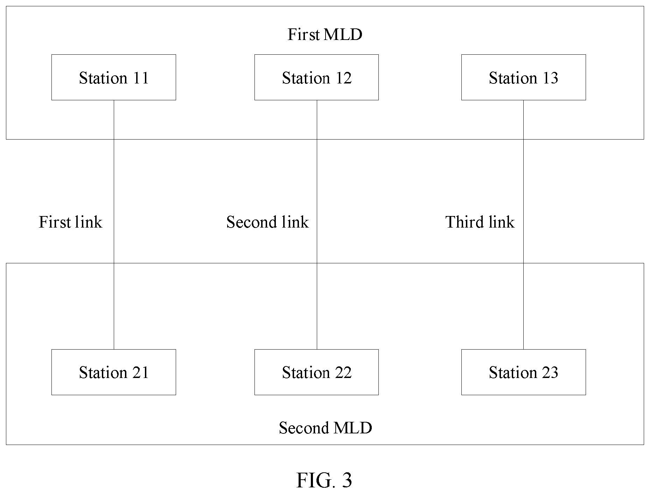

First, this application provides a WLAN communication system to which embodiments of this application are applicable. As shown in FIG. 3, the WLAN communication system includes a first MLD and a second MLD.

The first MLD and the second MLD are MLDs of different types. For example, the first MLD may be an AP MLD, and correspondingly, the second MLD is a non-AP MLD; or the first MLD may be a non-AP MLD, and correspondingly, the second MLD is an AP MLD.

Optionally, the first MLD and the second MLD may alternatively be MLDs of a same type. For example, the first MLD and the second MLD may be AP MLDs, or the first MLD and the second MLD may be non-AP MLDs.

Optionally, each of the first MLD and the second MLD includes at least one station (in FIG. 3, an example in which the first MLD includes three stations and the second MLD includes three stations is used for description). When the MLD is an AP MLD, a station included in the MLD is an AP. When the MLD is a non-AP MLD, a station included in the MLD is an STA.

Optionally, the AP MLD in the first MLD and the second MLD may establish at least one link, and different stations of the non-AP MLD may be associated with different links established by the AP MLD. That is, at least one link may exist between the first MLD and the second MLD. In this application, an example in which at least a first link and a second link exist between the first MLD and the second MLD is used for description.

Optionally, the communication system may further include at least one third MLD, and the third MLD is a non-AP MLD. A station of the third MLD may be associated with the link established by the AP MLD in the first MLD and the second MLD, that is, at least one link may exist between the AP MLD in the first MLD and the second MLD and the third AP MLD.

The STA included in the non-AP MLD or the non-AP MLD in embodiments of this application may be a wireless communication chip, a wireless sensor, or a wireless communication terminal, for example, a user terminal supporting a Wi-Fi communication function, a user apparatus, an access apparatus, a subscriber station, a subscriber unit, a mobile station, a user agent, and user equipment, where the user terminal may include various handheld devices, in-vehicle devices, wearable devices, Internet of Things (internet of things, IoT) devices, computing devices, or other processing devices connected to a wireless modem that have a wireless communication function, and various forms of user equipment (user equipment, UE), mobile phones (mobile phone), tablet computers (Pads), laptops, smart watches, smart televisions, mobile stations (mobile stations, MSs), terminals (terminals), terminal equipment (terminal equipment), portable communication devices, handheld devices, portable computing devices, entertainment devices, game devices or systems, global positioning system devices, or any other suitable devices configured to perform network communication through a wireless medium. In addition, the non-AP MLD may support 802.11be or a next-generation 802.11be standard. The STA may also support a plurality of WLAN standards such as 802.11ax, 802.11ac, 802.11n, 802.11g, 802.11b, and 802.11a.

The AP MLD or the AP included by the AP MLD in embodiments of this application may be an apparatus that provides a wireless communication function for the non-AP MLD associated with the AP MLD and that is deployed in a wireless communication network, and is mainly deployed in a home, a building, and a park, with a typical coverage radius of tens of meters to hundreds of meters. It is clear that the AP MLD or the AP included by the AP MLD may alternatively be deployed outdoors. The AP MLD is equivalent to a bridge that connects a wired network and a wireless network. A main function of the AP MLD is to connect various wireless network clients together and then connect the wireless network to the Ethernet. Specifically, the AP MLD may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP MLD may support 802.11be or a next-generation 802.11be standard. The AP may also support WLAN standards such as 802.11ax, 802.11ac, 802.11n, 802.11g, 802.11b, and 802.11a.

The following describes in detail the method provided in embodiments of this application. It may be understood that, in embodiments of this application, an execution body may perform some or all of steps in embodiments of this application. These steps or operations are merely examples. Other operations or variants of various operations may be further performed in embodiments of this application. In addition, the steps may be performed in a sequence different from a sequence presented in embodiments of this application, and it is possible that not all operations in embodiments of this application need to be performed.

It may be noted that names of fields provided in embodiments of this application are merely examples for description, and the fields may have other names. The names of the fields are not specifically limited in this application.

It may be understood that lengths of the fields in embodiments of this application are merely examples for description. The lengths of the fields are not limited to the lengths in embodiments of this application, and may be longer or shorter than the lengths provided in embodiments of this application.

It may be understood that a sequence of the fields, locations of the fields, and an inclusion relationship between the fields provided in embodiments of this application are merely examples for description. The sequence, the locations, and the inclusion relationship of the fields are not limited to the sequence, locations, and inclusion relationship in embodiments of this application. There may be another implementation. This is not specifically limited in embodiments of this application.

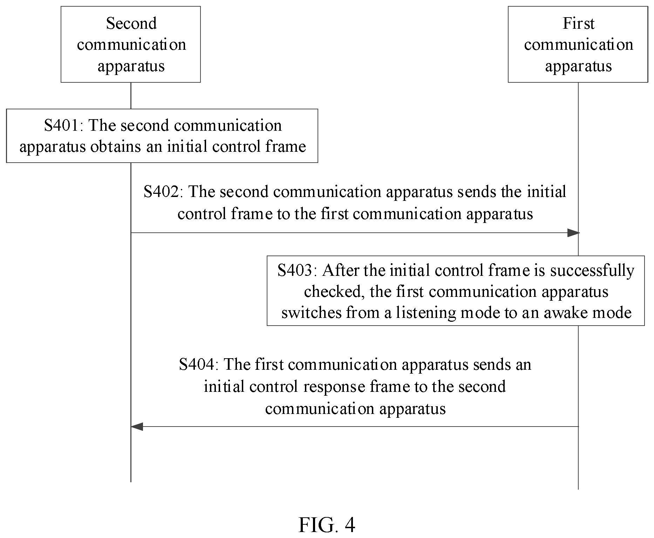

The following describes in detail the communication method according to embodiments of this application. As shown in FIG. 4, the communication method includes the following steps.

S401: A second communication apparatus obtains an initial control frame.

Optionally, the second communication apparatus may be a second multi-link device. Alternatively, the second communication apparatus may be any station (namely, a transmitting station) available to a corresponding link (or referred to as an operating link) in the second multi-link device. For example, as shown in FIG. 3, a case in which the second MLD includes a station 21, a station 22, and a station 23, and the three stations respectively correspond to a first link, a second link, and a third link is used as an example. When the first link, the second link, and the third link are available, transmitting stations in the second communication apparatus may be the station 21, the station 22, and the station 23.

The initial control frame includes a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field.

It should be understood that the first field is a user information field in the initial control frame, and the first field is further used to carry an association identifier (association identifier, AID) 12 field. Alternatively, the first field is further used to carry an association identifier 12 field and a reserved (Reserved) field.

In an optional implementation, a part of the first field excluding the second frame check sequence is remaining bits other than the second frame check sequence and the association identifier 12 field in the first field.

In this embodiment of this application, the part of the first field other than the second frame check sequence is the remaining bits in the first field other than the second frame check sequence and the association identifier 12 field. In this way, after receiving the initial control frame, the first multi-link device may check the remaining bits in the first field other than the second frame check sequence and the association identifier 12 field, so that correctness of the remaining bits can be accurately and effectively determined, thereby improving validity of checking the initial control frame.

In an optional implementation, a quantity of bits included in the second frame check sequence is less than or equal to a quantity of bits included in the user information field (for example, a length of the second frame check sequence is 2 bytes, that is, 16 bits). In this case, one field (namely, the first field) may carry all content of the second frame check sequence. That is, the first field is used to carry the association identifier 12 field whose length is 12 bits, the second frame check sequence whose length is 16 bits, and the reserved field whose length is 12 bits.

In another optional implementation, the quantity of bits included in the second frame check sequence is greater than the quantity of bits included in the user information field (for example, the length of the second frame check sequence is 4 bytes, that is, 32 bits). In this case, one field may not be able to carry all content of the second frame check sequence. As such, the first field may include the second field and the third field. In this case, the second field and the third field each are one user information field.

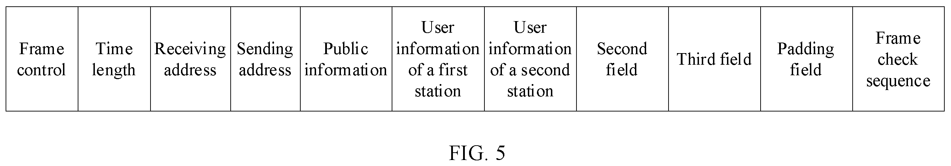

For example, as shown in FIG. 5, the initial control frame includes a frame control field, a duration field, a receiver address field, a transmitter address field, a common information field, a first station user information field, a second station user information field, a second field, a third field, a padding (padding) field, and a frame check sequence field.

Since the second field and the third field correspond to user information of the second frame check sequence, the second field and the third field may also be denoted as the user information field of the second frame check sequence. One station user information field (for example, the first station user information field) corresponds to user information of one station (namely, the first station).

It may be understood that a padding field may exist in the initial control frame, or no padding field exists in the initial control frame (in this case, a length of the padding field is 0).

In an optional implementation, the second field is used to carry the association identifier 12 field and a first part of the second frame check sequence, and the third field is used to carry the association identifier 12 field and a second part of the second frame check sequence.

It may be understood that when the length of the second frame check sequence is long (for example, the length of the second frame check sequence is 32 bits), a length of one user information field (namely, the second field or the third field) is 40 bits, and a length of the association identifier 12 field carried in one user information field is 12 bits. That is, for one user information field, a length is 28 bits excluding the association identifier 12 field. The length of the 28 bits cannot satisfy a 32-bit frame check sequence. Therefore, two user information fields (namely, the second field and the third field) are required to carry the second frame check sequence.

Specifically, the second field carries the first part of the second frame check sequence, and the third field carries the second part of the second frame check sequence. Certainly, the second field may alternatively carry the second part of the second frame check sequence. In this case, the second field is used to carry the first part of the second frame check sequence. A specific part of the second frame check sequence that is carried in the second field and the third field is not specifically limited in this embodiment of this application.

Optionally, for any user information field, an association identifier 12 field carried in the user information field may be set to different values, to implement different functions. For example, the association identifier 12 field carried in the user information field may be set to a first value to indicate that the user information field is used to carry the second frame check sequence. For another example, the association identifier 12 field carried in the user information field may alternatively be set to a second value to indicate that the user information field is used to carry other information (for example, user information of a station).

For example, the first value may be any integer between 2008 and 2044, and the second value may be 1.

In this embodiment of this application, the second field in the initial control frame carries the association identifier 12 field and the first part of the second frame check sequence, and the third field in the initial control frame carries the association identifier 12 field and the second part of the second frame check sequence. This can ensure that the initial control frame can carry all content of the second frame check sequence, thereby improving effectiveness of checking the initial control frame based on the second frame check sequence.

In an optional implementation, the second field and/or the third field are/is further used to carry a reserved (Reserved) field.

With reference to the descriptions of the foregoing embodiments, it should be understood that, for the two user information fields (namely, the second field and the third field) that carry the second frame check sequence, in addition to the 24 bits occupied by the two association identifier 12 fields and the 32 bits occupied by the second frame check sequence, the second field and the third field have a total length of 24 bits, and the 24 bits are a length of the reserved field.

Optionally, the reserved field carried in the second field and/or the third field may carry new signaling. For example, the reserved field may indicate a target receiving station to reply with different response frames, or may indicate a non-target receiving station not to update a network allocation vector (network allocation vector, NAV).

It may be understood that, the reserved field is carried in the second field and/or the third field, to ensure that the second field and the third field are fully used, thereby improving resource utilization in a communication process, and helping meet diversified configurations in the future.

In an implementation of this embodiment of this application, the first part of the second frame check sequence is located in B24 to B29 of the second field, and the second part of the second frame check sequence is located in B24 to B39 of the third field.

It should be understood that, in this implementation, the reserved field carried in the second field is located in B12 to B23 of the second field, and the reserved field carried in the third field is located in B12 to B23 of the third field.

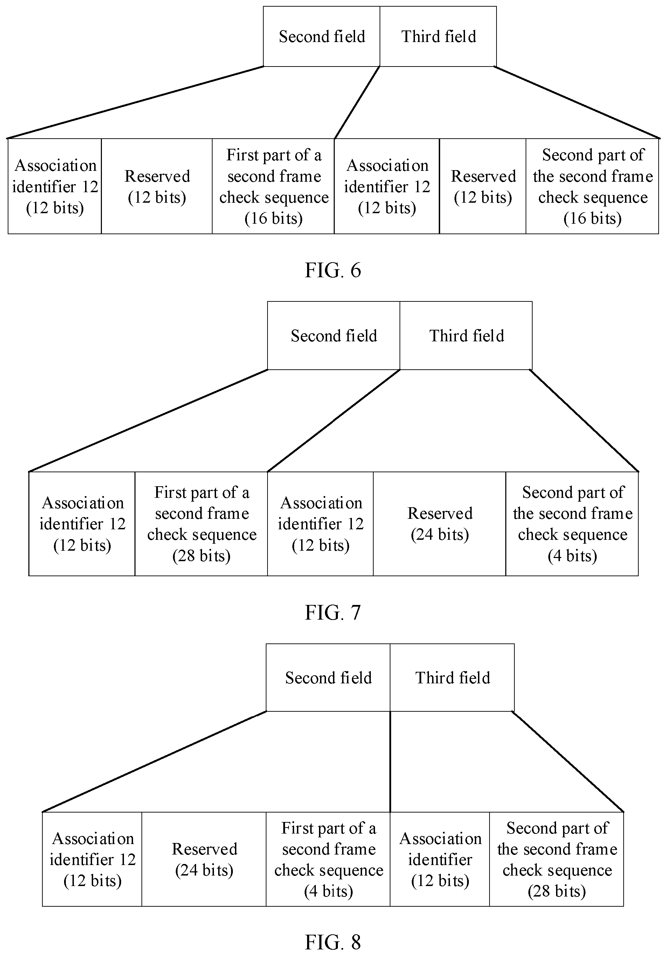

For example, as shown in FIG. 6, the second field is used to carry an association identifier 12 field whose length is 12 bits (bits), a reserved field whose length is 12 bits, and a first part of the second frame check sequence whose length is 16 bits, and the first part of the second frame check sequence whose length is 16 bits is located in B24 to B29 of the second field. The third field is used to carry the association identifier 12 field whose length is 12 bits, the reserved field whose length is 12 bits, and the second part of the second frame check sequence whose length is 16 bits, and the second part of the first frame check sequence whose length is 16 bits is located in B24 to B29 of the third field.

It may be understood that the first part of the second frame check sequence is located in B24 to B29 of the second field, and the second part of the second frame check sequence is located in B24 to B39 of the third field. In this way, the first part of the second frame check sequence is located after the reserved field carried in the second field, and the second part of the second frame check sequence is also located after the reserved field carried in the third field, so that the second frame check sequence can be placed at a rear location in the second field and the third field, which complies with a convention of placing a frame check sequence after a field to be checked (including the association identifier 12 field and the reserved field, also referred to as a bit to be checked), thereby creating an aesthetically pleasing layout and facilitating implementation.

In another implementation of this embodiment of this application, the first part of the second frame check sequence is located in B12 to B39 of the second field, and the second part of the second frame check sequence is located in B36 to B39 of the third field.

It should be understood that, in this implementation, the length of the first part of the second frame check sequence is long. Specifically, the length of the first part of the second frame check sequence is equal to a target length (for example, 28 bits). In other words, the second field is completely used to carry the association identifier 12 field and the first part of the second frame check sequence. In this case, there is no reserved field in the second field. The reserved field carried in the third field is located in B12 to B35 of the third field.

For example, as shown in FIG. 7, the second field is used to carry an association identifier 12 field whose length is 12 bits and a first part of the second frame check sequence whose length is 28 bits, and the first part of the second frame check sequence whose length is 28 bits is located in B12 to B39 of the second field. The third field is used to carry an association identifier 12 field whose length is 12 bits, a reserved field whose length is 24 bits, and a second part of the second frame check sequence whose length is 4 bits, and the second part of the second frame check sequence whose length is 4 bits is located in B36 to B39 of the third field.

It may be understood that the first part of the second frame check sequence is located in B12 to B39 of the second field, and the second part of the second frame check sequence is located in B36 to B39 of the third field. In this way, the second frame check sequence can be placed at a rear position in the second field and the third field, which complies with the convention of placing the frame check sequence after the field to be checked.

In still another implementation of this embodiment of this application, the first part of the second frame check sequence is located in B36 to B39 of the second field, and the second part of the second frame check sequence is located in B12 to B39 of the third field.

It should be understood that, in this implementation, the length of the second part of the second frame check sequence is long. Specifically, the length of the second part of the second frame check sequence is equal to the target length. In other words, the third field is completely used to carry the association identifier 12 field and the second part of the second frame check sequence. In this case, there is no reserved field in the third field. The reserved field carried in the second field is located in B12 to B35 of the second field.

For example, as shown in FIG. 8, the second field is used to carry an association identifier 12 field whose length is 12 bits, a reserved field whose length is 24 bits, and a first part of the second frame check sequence whose length is 4 bits, and the first part of the second frame check sequence whose length is 4 bits is located in B36 to B39 of the second field. The third field is used to carry an association identifier 12 field whose length is 12 bits and a second part of the second frame check sequence whose length is 28 bits.

It may be understood that the first part of the second frame check sequence is located in B36 to B39 of the second field, and the second part of the second frame check sequence is located in B12 to B39 of the third field. In this way, the second frame check sequence can be placed at a rear position in the second field and the third field, which complies with the convention of placing the frame check sequence after the field to be checked.

In an optional implementation, the first part of the second frame check sequence is located in B12 to B27 of the second field, and the second part of the second frame check sequence is located in B12 to B27 of the third field.

It should be understood that, in this implementation, the reserved field carried in the second field is located in B28 to B39 of the second field, and the reserved field carried in the third field is located in B28 to B39 of the third field.

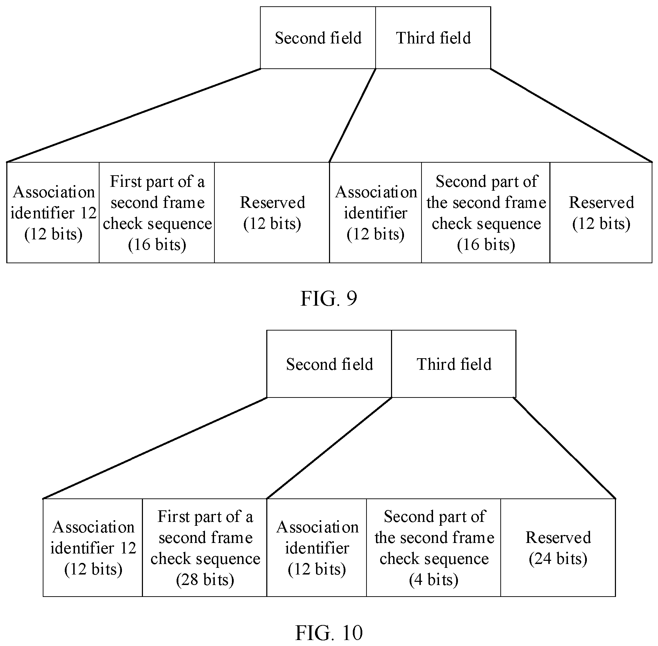

For example, as shown in FIG. 9, the second field is used to carry an association identifier 12 field whose length is 12 bits, a first part of the second frame check sequence whose length is 16 bits, and a reserved field whose length is 12 bits, and the first part of the second frame check sequence whose length is 16 bits is located in B12 to B27 of the second field. The third field is used to carry an association identifier 12 field whose length is 12 bits, a second part of the second frame check sequence whose length is 16 bits, and a reserved field whose length is 12 bits, and the second part of the first frame check sequence whose length is 16 bits is located in B12 to B27 of the third field.

It may be understood that the first part of the second frame check sequence is located in B12 to B27 of the second field, and the second part of the second frame check sequence is located in B12 to B27 of the third field. In this way, the first part of the second frame check sequence is located before the reserved field carried in the second field, and the second part of the second frame check sequence is also located before the reserved field carried in the third field. In other words, the second frame check sequence may be placed in a front position of the second field and the third field, so that a first communication apparatus can parse the second frame check sequence as early as possible, thereby improving check efficiency of the initial control frame.

In another optional implementation, the first part of the second frame check sequence is located in B12 to B39 of the second field, and the second part of the second frame check sequence is located in B12 to B15 of the third field.

It should be understood that, in this implementation, the length of the first part of the second frame check sequence is long. Specifically, the length of the first part of the second frame check sequence is equal to the target length. In other words, the second field is completely used to carry the association identifier 12 field and the first part of the second frame check sequence. In this case, there is no reserved field in the second field. The reserved field carried in the third field is located in B16 to B39 of the third field.

For example, as shown in FIG. 10, the second field is used to carry an association identifier 12 field whose length is 12 bits and a first part of the second frame check sequence whose length is 28 bits, and the first part of the second frame check sequence whose length is 28 bits is located in B12 to B39 of the second field. The third field is used to carry an association identifier 12 field whose length is 12 bits, a second part of the second frame check sequence whose length is 4 bits, and a reserved field whose length is 24 bits, and the second part of the second frame check sequence whose length is 4 bits is located in B12 to B15 of the third field.

It may be understood that the first part of the second frame check sequence is located in B12 to B39 of the second field, and the second part of the second frame check sequence is located in B12 to B15 of the third field. In this way, the second frame check sequence may be placed in a front position of the second field and the third field, so that a first communication apparatus can parse the second frame check sequence as early as possible, thereby improving check efficiency of the initial control frame.

S402: The second communication apparatus sends the initial control frame to the first communication apparatus. Correspondingly, the first communication apparatus receives the initial control frame sent by the second communication apparatus.

The initial control frame is used to indicate the first communication apparatus to switch from a listening state to an awake state.

Optionally, when the second communication apparatus is the second multi-link device, the first communication apparatus may be the first multi-link device. When the second communication apparatus is a transmitting station, the first communication apparatus may be a station (denoted as a receiving station) corresponding to the transmitting station in the first multi-link device. For example, as shown in FIG. 3, a case in which the first MLD includes a station 11, a station 12, and a station 13, and the three stations respectively correspond to a first link, a second link, and a third link is used as an example. When the first link, the second link, and the third link are available, the receiving station in the first communication apparatus may be the station 11, the station 12, and the station 13.

With reference to the description of the foregoing embodiment, it should be understood that the initial control frame includes the first field and the frame check sequence field, the first field is used to carry the second frame check sequence, the second frame check sequence is used to check the field before the first field in the initial control frame and some or all bits in the first field excluding the second frame check sequence, the frame check sequence field is used to carry the first frame check sequence, and the first field is located before the frame check sequence field.

S403: After the initial control frame is successfully checked, the first communication apparatus switches from the listening state to the awake state.

It should be understood that, after receiving the initial control frame sent by the second communication apparatus, the first communication apparatus checks the initial control frame, to determine whether an error/exception exists in the initial control frame in a transmission process.

In this embodiment of this application, the first communication apparatus may include at least one of three types of stations.

In a case, a type of station included in the first communication apparatus is a legacy station that supports only a protocol version earlier than ultra high reliability (ultra high reliability, UHR) and a station that does not support a UHR protocol version of a two-frame check sequence feature. Because the foregoing station can identify the first frame check sequence, but cannot identify the second frame check sequence, a check result of the first frame check sequence is used as a check result of the initial control frame that carries the two frame check sequences. Based on this, the communication method provided in this embodiment of this application may further include the following step A.

Step A: If the first communication apparatus cannot parse the second frame check sequence, the first communication apparatus checks the initial control frame based on the first frame check sequence.

It should be understood that, if the first communication apparatus cannot parse the second frame check sequence, it indicates that the first communication apparatus does not have a capability of parsing/identifying the second frame check sequence, and specifically, cannot check the initial control frame based on the second frame check sequence. In this case, the first communication apparatus may check the initial control frame based on the first frame check sequence, to ensure that a checking process of the initial control frame is effectively performed.

In another case, the another type of station included in the first communication apparatus is a receiving station (namely, the target receiving station) of the initial control frame, and the target receiving station needs to perform state switching and return an initial control response frame to the second communication apparatus. After receiving the second frame check sequence, the target receiving station starts to perform state switching, and cannot continue to parse the MAC padding and the first frame check sequence during state switching. Therefore, the target receiving station uses a check result of the second frame check sequence as the check result of the initial control frame.

Optionally, for the target receiving station, the check result of the second frame check sequence may be a check error (or a check failure). In this case, the target receiving station has two options. The first option is to stop parsing the initial control frame and treat the initial control frame as an error frame. The second option is to continue to parse the initial control frame and check the first frame check sequence. In the second option, there is a high probability that the first frame check sequence is also incorrectly checked. Because an error has occurred in a part before the second frame check sequence, there is a very low probability that the first frame check sequence is correctly checked (or successfully checked) in the second option. In this case, because the MAC padding is before the first frame check sequence, the target receiving station does not have time to perform state switching, and therefore cannot return the initial control response frame to the second communication apparatus in SIFS time after the initial control frame. In this case, if the target receiving station continues to parse the first frame check sequence after the second frame check sequence is checked incorrectly, it is meaningless. Therefore, if the check result of the second frame check sequence is the check error, the target receiving station stops parsing the initial control frame, so that power consumption can be reduced.

In still another case, still another type of station included in the first communication apparatus has a feature of supporting two frame check sequences, but the station is not a receiving station (that is, the non-target receiving station) of the initial control frame, and the non-target receiving station is capable of parsing the second frame check sequence and the first frame check sequence.

For example, the following Table 1 shows four cases in which the non-target receiving station parses the second frame check sequence and the first frame check sequence. In case 1 and case 4, the check result of the second frame check sequence is consistent with the check result of the first frame check sequence, and in case 2 and case 3, the check result of the second frame check sequence is inconsistent with the check result of the first frame check sequence.

Specifically, for case 2, because the part before the second frame check sequence is correctly received, and the MAC padding part after the second frame check sequence is incorrectly received, a probability of occurrence of case 2 is very high. For case 3, if an error has occurred in the part before the second frame check sequence, the first frame check sequence also checks the part. In this case, a probability of correctly checking is very low.

In this way, the non-target receiving station uses the check result of the second frame check sequence as the check result of the initial control frame.

**Table 1**

| | Second frame check sequence | First frame check sequence | |
|---|---|---|---|
| Case 1 | Correctly checked | Correctly checked | Correctly checked |
| Case 2 | Correctly checked | Incorrectly checked | Possibly; a padding field is abnormal |
| Case 3 | Incorrectly checked | Correctly checked | Rarely |
| Case 4 | Incorrectly checked | Incorrectly checked | Incorrectly checked |

In this embodiment of this application, one initial control frame may include one or more user information fields, and each user information field includes one association identifier 12 field. For a station, if an association identifier of the station matches a value of the association identifier 12 field, the station is the target receiving station. On the contrary, if the association identifier of the station does not match the value of the association identifier 12 field, the station is the non-target receiving station.

Based on this, the communication method provided in this embodiment of this application may further include the following step B and step C.

Step B: If the first communication apparatus can parse the second frame check sequence and the first communication apparatus is the non-target receiving station of the initial control frame, the first communication apparatus checks, based on the second frame check sequence, a field before the first field in the initial control frame and some or all bits in the first field excluding the second frame check sequence.

It should be understood that, if the first communication apparatus can parse the second frame check sequence, it indicates that the first communication apparatus has a parsing capability (or an identification capability) of the second frame check sequence, and the first communication apparatus may check the initial control frame based on the second frame check sequence. In this case, when the first communication apparatus is the non-target receiving station of the initial control frame, the first communication apparatus may check, based on the second frame check sequence, the field before the first field in the initial control frame and some or all bits in the first field excluding the second frame check sequence. Specifically, the first communication apparatus checks the initial control frame based on the second frame check sequence.

Step C: When the field before the first field in the initial control frame and some or all bits in the first field excluding the second frame check sequence are successfully checked based on the second frame check sequence, the first communication apparatus determines that the initial control frame is successfully checked.

It should be understood that when the field before the first field in the initial control frame and some or all bits in the first field excluding the second frame check sequence are successfully checked based on the second frame check sequence, it indicates that no exception/error exists in the initial control frame in a transmission process. In this case, the first communication apparatus may determine that the initial control frame is successfully checked, thereby accurately and effectively determining the check result of the initial control frame.

Optionally, after the initial control frame fails to be checked, the first communication apparatus may discard the initial control frame.

Optionally, the communication method shown in FIG. 4 may further include the following steps.

S404: The first communication apparatus sends an initial control response frame to the second communication apparatus. Correspondingly, the second communication apparatus receives the initial control response frame sent by the first communication apparatus.

The initial control response frame is used to notify that a running status of the first communication apparatus is successfully switched.

It should be understood that, after receiving the initial control response frame sent by the first communication apparatus, the second communication apparatus may determine that the first communication apparatus has exited the listening state, or may be understood as that the first communication apparatus has switched from the listening state to the awake state.

Based on the method provided in the foregoing embodiment, the second communication apparatus may obtain the initial control frame and send the initial control frame to the first communication apparatus. The initial control frame includes the first field and the frame check sequence field, the first field is used to carry the second frame check sequence, and the frame check sequence field is used to carry the first frame check sequence. In this way, after receiving the initial control frame, the first communication apparatus may check the initial control frame based on the second frame check sequence, and may also check the initial control frame based on the first frame check sequence, to implement a process of checking the initial control frame, thereby quickly and effectively checking the initial control frame, and improving data transmission efficiency.

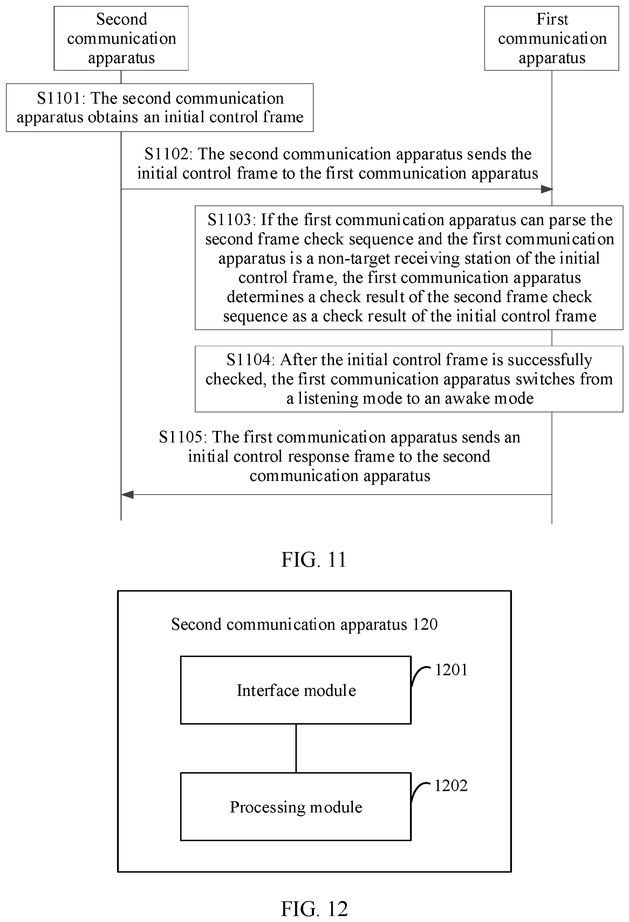

In addition to the foregoing method, this application further provides a communication method, to determine, when an initial control frame includes two frame check sequences, a check result of which frame check sequence as a check result of the initial control frame. Specifically, as shown in FIG. 11, the communication method provided in this embodiment of this application includes the following steps.

S1101: A second communication apparatus obtains an initial control frame.

The initial control frame includes a first field and a frame check sequence field, the first field is used to carry a second frame check sequence, the frame check sequence field is used to carry a first frame check sequence, and the first field is located before the frame check sequence field.

S1102: The second communication apparatus sends the initial control frame to a first communication apparatus. Correspondingly, the first communication apparatus receives the initial control frame sent by the second communication apparatus.

The initial control frame is used to indicate the first communication apparatus to switch from a listening state to an awake state.

S1103: If the first communication apparatus can parse the second frame check sequence and the first communication apparatus is a non-target receiving station of the initial control frame, the first communication apparatus determines a check result of the second frame check sequence as a check result of the initial control frame.

In an optional implementation, if the first communication apparatus cannot parse the second frame check sequence, the first communication apparatus determines a check result of the first frame check sequence as the check result of the initial control frame.

It may be understood that explanations and descriptions in S1103 are the same as or similar to descriptions in step A to step C in the foregoing embodiment, and details are not described herein again.

Optionally, the method shown in FIG. 11 may further include the following steps.

S1104: After the initial control frame is successfully checked, the first communication apparatus switches from the listening state to the awake state.

S1105: The first communication apparatus sends an initial control response frame to the second communication apparatus. Correspondingly, the second communication apparatus receives the initial control response frame sent by the first communication apparatus.

The initial control response frame is used to notify that a running status of the first communication apparatus is successfully switched.

In this embodiment of this application, the second communication apparatus may obtain the initial control frame and send the initial control frame to the first communication apparatus. After receiving the initial control frame, the first communication apparatus may determine whether the first communication apparatus can parse the second frame check sequence and whether the first communication apparatus is the non-target receiving station of the initial control frame. If the first communication apparatus can parse the second frame check sequence and the first communication apparatus is the non-target receiving station of the initial control frame, the first communication apparatus may determine the check result of the second frame check sequence as the check result of the initial control frame. If the first communication apparatus cannot parse the second frame check sequence, the first communication apparatus may determine the check result of the first frame check sequence as the check result of the initial control frame. The check result of which frame check sequence is used as the check result of the initial control frame may be accurately and effectively determined based on a parsing capability of the first communication apparatus and a specific type of the first communication apparatus, thereby improving check accuracy of the initial control frame.

It may be understood that, to implement functions in the foregoing embodiments, the communication apparatus includes corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

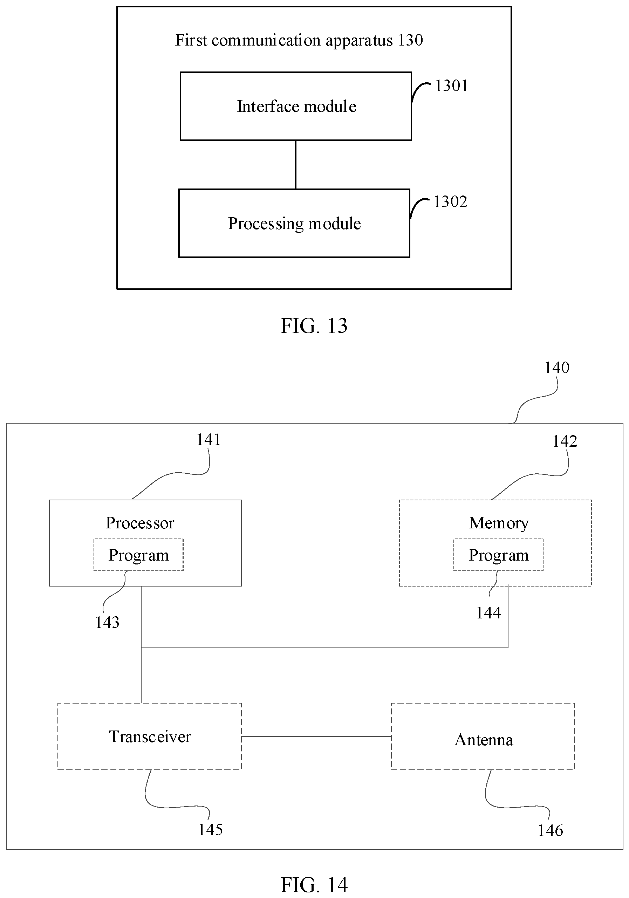

With reference to FIG. 1 to FIG. 11, the foregoing describes in detail the communication method provided in embodiments. With reference to FIG. 12 and FIG. 13, the following describes a communication apparatus provided in embodiments.

In this application, functional modules of the communication apparatus may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It may be understood that division of the modules in this application is an example. The division is merely logical function division and may be other division in actual implementation.

In an implementation scenario, for example, the communication apparatus is the second communication apparatus in the foregoing method embodiment. FIG. 12 is a diagram of a structure of a second communication apparatus 120. The second communication apparatus may be a second multi-link device or a station in the second multi-link device. The second communication apparatus 120 includes an interface module 1201 and a processing module 1202. The interface module 1201 may also be referred to as an interface unit, and is configured to perform a sending operation and a receiving operation. For example, the interface module may be an interface circuit, a transceiver machine, a transceiver, or a communication interface. The processing module 1202 may also be referred to as a processing unit, and is configured to perform an operation other than the receiving operation and the sending operation. For example, the processing module may be a processing circuit or a processor.

The processing module 1202 is configured to obtain an initial control frame, where the initial control frame includes a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field.

The interface module 1201 is configured to send the initial control frame to a first multi-link device, where the initial control frame is used to indicate the first multi-link device to switch from a listening state to an awake state.

In a possible design, a part of the first field excluding the second frame check sequence is remaining bits other than the second frame check sequence and an association identifier 12 field in the first field.

In a possible design, the first field includes a second field and a third field, the second field is used to carry the association identifier 12 field and a first part of the second frame check sequence, and the third field is used to carry the association identifier 12 field and a second part of the second frame check sequence.

In a possible design, the second field and/or the third field are/is further used to carry a reserved field.

In a possible design, the first part of the second frame check sequence is located in B24 to B39 of the second field, and the second part of the second frame check sequence is located in B24 to B39 of the third field.

In a possible design, the first part of the second frame check sequence is located in B12 to B39 of the second field, and the second part of the second frame check sequence is located in B36 to B39 of the third field.

In a possible design, the first part of the second frame check sequence is located in B36 to B39 of the second field, and the second part of the second frame check sequence is located in B12 to B39 of the third field.

In a possible design, the first part of the second frame check sequence is located in B12 to B27 of the second field, and the second part of the second frame check sequence is located in B12 to B27 of the third field.

In a possible design, the first part of the second frame check sequence is located in B12 to B39 of the second field, and the second part of the second frame check sequence is located in B12 to B15 of the third field.

In another implementation scenario, for example, the communication apparatus is the first communication apparatus in the foregoing method embodiment. FIG. 13 is a diagram of a structure of a first communication apparatus 130. The first communication apparatus may be a first multi-link device or a station in the first multi-link device. The first communication apparatus 130 includes an interface module 1301 and a processing module 1302. The interface module 1301 may also be referred to as an interface unit, and is configured to perform a sending operation and a receiving operation. For example, the interface module may be an interface circuit, a transceiver machine, a transceiver, or a communication interface. The processing module 1302 may also be referred to as a processing unit, and is configured to perform an operation other than the receiving operation and the sending operation. For example, the processing module may be a processing circuit or a processor.

The interface module 1301 is configured to receive an initial control frame sent by a second multi-link device, where the initial control frame includes a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field.

The processing module 1302 is configured to: after the initial control frame is successfully checked, switch from a listening state to an awake state.

In a possible design, a part of the first field excluding the second frame check sequence is remaining bits other than the second frame check sequence and an association identifier 12 field in the first field.

In a possible design, the first field includes a second field and a third field, the second field is used to carry the association identifier 12 field and a first part of the second frame check sequence, and the third field is used to carry the association identifier 12 field and a second part of the second frame check sequence.

In a possible design, the second field and/or the third field are/is further used to carry a reserved field.

In a possible design, the first part of the second frame check sequence is located in B24 to B39 of the second field, and the second part of the second frame check sequence is located in B24 to B39 of the third field.

In a possible design, the first part of the second frame check sequence is located in B12 to B39 of the second field, and the second part of the second frame check sequence is located in B36 to B39 of the third field.

In a possible design, the first part of the second frame check sequence is located in B36 to B39 of the second field, and the second part of the second frame check sequence is located in B12 to B39 of the third field.

In a possible design, the first part of the second frame check sequence is located in B12 to B27 of the second field, and the second part of the second frame check sequence is located in B12 to B27 of the third field.

In a possible design, the first part of the second frame check sequence is located in B12 to B39 of the second field, and the second part of the second frame check sequence is located in B12 to B15 of the third field.

In a possible design, the processing module 1302 is further configured to: if the first multi-link device is capable of parsing the second frame check sequence and the first multi-link device is a non-target receiving station of the initial control frame, check, based on the second frame check sequence, the field before the first field in the initial control frame and some or all bits in the first field excluding the second frame check sequence.

The processing module 1302 is further configured to: when the field before the first field in the initial control frame and some or all bits in the first field excluding the second frame check sequence are successfully checked based on the second frame check sequence, determine that the initial control frame is successfully checked.

In a possible design, the processing module 1302 is further configured to: if the second frame check sequence cannot be parsed, check the initial control frame based on the first frame check sequence.

For the communication apparatus in the foregoing embodiment, a specific manner of performing an operation by each module and beneficial effects thereof are described in detail in the foregoing method embodiments, and details are not described herein again.

FIG. 14 is a diagram of a structure of a possible communication apparatus according to an embodiment of this application. It can be understood that the communication apparatus 140 includes means in necessary forms, such as a module, a unit, an element, a circuit, or an interface, to be properly configured together to perform the present solutions. The communication apparatus 140 may be the first multi-link device, the second multi-link device, the station in the first multi-link device, the station in the second multi-link device, or an apparatus included in the first multi-link device in the foregoing embodiments, for example, a chip, or an apparatus included in the second link device, for example, a chip, configured to implement the method described in the foregoing method embodiments. The communication apparatus 140 includes one or more processors 141. The processor 141 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, the first multi-link device, the second multi-link device, the station in the first multi-link device, the station in the second multi-link device, the apparatus included in the first multi-link device, for example, a chip, or the apparatus included in the second link device, for example, a chip), execute a software program, and process data of the software program.

Optionally, in a design, the processor 141 may include a program 143 (which may also be referred to as code or an instruction sometimes). The program 143 may be run on the processor 141, so that the communication apparatus 140 performs the method described in the foregoing embodiments. In another possible design, the communication apparatus 140 includes a circuit (not shown in FIG. 14), and the circuit is configured to implement a sending function and a receiving function in the foregoing embodiments.

Optionally, the communication apparatus 140 may include one or more memories 142 storing a program 144 (which may also be referred to as code or an instruction sometimes). The program 144 may be run on the processor 141, so that the communication apparatus 140 performs the method described in the foregoing method embodiments.

Optionally, the processor 141 and/or the memory 142 may further store data. The processor and the memory may be separately disposed, or may be integrated together.

Optionally, the communication apparatus 140 may further include a transceiver 145 and/or an antenna 146. The processor 141 may also be sometimes referred to as a processing unit, and controls a communication apparatus (for example, the first multi-link device, the second multi-link device, the station in the first link device, the station in the second link device, the apparatus included in the first multi-link device, for example, a chip, or the apparatus included in the second link device, for example, a chip). The transceiver 145 may sometimes also be referred to as a transceiver unit, a transceiver machine, a transceiver circuit, a transceiver device, or the like, and is configured to implement a transceiver function of the communication apparatus through the antenna 146.

A person skilled in the art may understand that the structure shown in FIG. 14 does not constitute a limitation on the communication apparatus 140, and the communication apparatus 140 may include more or fewer components than those shown in the figure, or combine some components, or use different component arrangements.

In addition, this application further provides a computer-readable storage medium, including instructions. When the instructions are executed by a communication apparatus, the communication apparatus is enabled to perform the communication method according to the foregoing embodiments.

In addition, this application further provides a computer program product, including instructions. When the instructions are executed by a communication apparatus, the communication apparatus is enabled to perform the communication method according to the foregoing embodiments.

In addition, this application further provides a communication system. The communication system includes the second multi-link device and the first multi-link device in the foregoing embodiments. Alternatively, the communication system includes the station in the second multi-link device and the station in the first multi-link device in the foregoing embodiments.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely for an illustration purpose, and the true scope and spirit of this application are subject to the claims.

## Claims

1. A communication method, wherein the method comprises:
obtaining an initial control frame, wherein the initial control frame comprises a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field; and
sending the initial control frame to a first multi-link device, wherein the initial control frame is used to indicate the first multi-link device to switch from a listening state to an awake state.

2. The communication method according to claim 1, wherein a part of the first field excluding the second frame check sequence is remaining bits other than the second frame check sequence and an association identifier 12 field in the first field.

3. The communication method according to claim 1 or 2, wherein the first field comprises a second field and a third field, the second field is used to carry the association identifier 12 field and a first part of the second frame check sequence, and the third field is used to carry the association identifier 12 field and a second part of the second frame check sequence.

4. The communication method according to claim 3, wherein the second field and/or the third field are/is further used to carry a reserved field.

5. The communication method according to claim 3 or 4, wherein the first part of the second frame check sequence is located in B24 to B39 of the second field, and the second part of the second frame check sequence is located in B24 to B39 of the third field.

6. The communication method according to claim 3 or 4, wherein the first part of the second frame check sequence is located in B12 to B39 of the second field, and the second part of the second frame check sequence is located in B36 to B39 of the third field.

7. The communication method according to claim 3 or 4, wherein the first part of the second frame check sequence is located in B36 to B39 of the second field, and the second part of the second frame check sequence is located in B12 to B39 of the third field.

8. The communication method according to claim 3 or 4, wherein the first part of the second frame check sequence is located in B12 to B27 of the second field, and the second part of the second frame check sequence is located in B12 to B27 of the third field.

9. The communication method according to claim 3 or 4, wherein the first part of the second frame check sequence is located in B12 to B39 of the second field, and the second part of the second frame check sequence is located in B12 to B15 of the third field.

10. A communication method, wherein the method comprises:
receiving an initial control frame sent by a second multi-link device, wherein the initial control frame comprises a first field and a frame check sequence field, the first field is used to carry a second frame check sequence, the second frame check sequence is used to check a field before the first field in the initial control frame and some or all bits in the first field excluding the second frame check sequence, the frame check sequence field is used to carry a first frame check sequence, and the first field is located before the frame check sequence field; and
after the initial control frame is successfully checked, switching from a listening state to an awake state.

11. The communication method according to claim 10, wherein a part of the first field excluding the second frame check sequence is remaining bits other than the second frame check sequence and an association identifier 12 field in the first field.

12. The communication method according to claim 10 or 11, wherein the first field comprises a second field and a third field, the second field is used to carry the association identifier 12 field and a first part of the second frame check sequence, and the third field is used to carry the association identifier 12 field and a second part of the second frame check sequence.

13. The communication method according to claim 12, wherein the second field and/or the third field are/is further used to carry a reserved field.

14. The communication method according to claim 12 or 13, wherein the first part of the second frame check sequence is located in B24 to B39 of the second field, and the second part of the second frame check sequence is located in B24 to B39 of the third field.

15. The communication method according to claim 12 or 13, wherein the first part of the second frame check sequence is located in B12 to B39 of the second field, and the second part of the second frame check sequence is located in B36 to B39 of the third field.

16. The communication method according to claim 12 or 13, wherein the first part of the second frame check sequence is located in B36 to B39 of the second field, and the second part of the second frame check sequence is located in B12 to B39 of the third field.

17. The communication method according to claim 12 or 13, wherein the first part of the second frame check sequence is located in B12 to B27 of the second field, and the second part of the second frame check sequence is located in B12 to B27 of the third field.

18. The communication method according to claim 12 or 13, wherein the first part of the second frame check sequence is located in B12 to B39 of the second field, and the second part of the second frame check sequence is located in B12 to B15 of the third field.

19. The communication method according to any one of claims 10 to 18, wherein the method further comprises:
if a first multi-link device is capable of parsing the second frame check sequence and the first multi-link device is a non-target receiving station of the initial control frame, checking, based on the second frame check sequence, the field before the first field in the initial control frame and some or all bits in the first field excluding the second frame check sequence; and
when the field before the first field in the initial control frame and some or all bits in the first field excluding the second frame check sequence are successfully checked based on the second frame check sequence, determining that the initial control frame is successfully checked.

20. A communication apparatus, comprising a unit or module configured to perform the method according to any one of claims 1 to 9, or comprising a unit or module configured to perform the method according to any one of claims 10 to 19.

21. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 9 or the method according to any one of claims 10 to 19.

22. A computer-readable storage medium, comprising computer instructions, wherein when the computer instructions are run on a communication apparatus, the communication apparatus is enabled to perform the method according to any one of claims 1 to 9, or perform the method according to any one of claims 10 to 19.

23. A computer program product, comprising instructions, wherein when the instructions are run on a communication apparatus, the communication apparatus is enabled to perform the method according to any one of claims 1 to 9, or perform the method according to any one of claims 10 to 19.
